# EUROPÄISCHE PATENTSCHRIFT

(11) **EP 3 317 001 B1**
(45) Veröffentlichungstag und Bekanntmachung des Hinweises auf die Patenterteilung: **17.08.2022**
(21) Anmeldenummer: 16734197.3
(22) Anmeldetag: 07.06.2016
(51) Int. Cl.: B01D 63/10

(54) **GEWICKELTES MEMBRANMODUL UND VERFAHREN ZUR DIFFUSIONSDIALYSE MIT GEGENSTROM-MODUS**
COILED MEMBRANE MODULE AND DIFFUSION DIALYSIS METHOD WITH A COUNTERFLOW MODE
MODULE MEMBRANAIRE ENROULÉ ET PROCÉDÉ DE DIALYSE PAR DIFFUSION AVEC MODE CONTRE-COURANT

(30) Priorität: 01.07.2015 DE 202015103472 U
(43) Veröffentlichungstag der Anmeldung: 09.05.2018
(73) Patentinhaber: Spiraltec GmbH, 74343 Sachsenheim (DE)
(72) Erfinder: WEIMER, Thomas, 71065 Sindelfingende (DE)
(74) Vertreter: Raible Deissler Lehmann Patentanwälte PartG mbB
(86) Internationale Anmeldenummer: PCT/EP2016/025054
(87) Internationale Veröffentlichungsnummer: WO 2017/001060

(56) Entgegenhaltungen:
- WO-A1-91/11249
- CN-A- 101 983 756
- GB-A- 489 654
- JP-A- S5 124 587
- JP-A- H02 180 622
- US-A- 5 580 452

## Beschreibung

### Technisches Gebiet

Die vorliegende Erfindung betrifft ein Membranmodul zur Diffusionsdialyse bzw. Donnan-Dialyse und ein entsprechendes Verfahren zur Diffusionsdialyse.

### Beschreibung des Standes der Technik

Die Donnan-Dialyse kann technisch sowohl für die Entfernung von Ionen aus Trinkwasser als auch für die Rückgewinnung von Säuren und Laugen aus industriellen Prozesslösungen genutzt werden. Das Verfahren der Donnan-Dialyse, auch Diffusionsdialyse genannt, findet seinen Einsatz beispielsweise bei der Rückgewinnung von freien Säuren und Laugen aus verbrauchten Behandlungsbädern der Oberflächen- und Textiltechnik. Der Donnan-Effekt beruht auf dem Konzentrationsunterschied zweier von einer semipermeablen Membran getrennter Lösungen. In Folge der geringen treibenden Kräfte ist das Verfahren in einem strengen Gegenstrombetrieb durchführbar. Es ist robust, langzeitstabil und benötigt nur einen minimalen Energieaufwand.

Unter Verwendung von Anionenaustauschermembranen können auf diese Weise ungebundene starke Säuren zurückgewonnen werden (Säuredialyse). Unter Verwendung von Kationenaustauschermembranen können Laugen zurückgewonnen werden (Laugendialyse). Dabei wird in einer Kammer das verbrauchte Bad durch eine Membran getrennt mit einer zweiten von Wasser durchströmten Kammer im Gegenstrom kontaktiert.

Ein schwerwiegendes Hemmnis für die weite Verbreitung dieses umweltfreundlichen Verfahrens sind bis heute die resultierenden hohen Investitions- und Betriebskosten für Diffusionsdialyse-Anlagen, die vor allem von den Membranmodulkosten bestimmt werden. Es werden große Membranflächen in der industriellen Umsetzung benötigt. Die Membranmodule sind in der Regel als sogenannte "Plate-and-Frame" Systeme konfiguriert, ähnlich den Batterien und Brennstoffzellen. Aufgrund begrenzter Membranstandzeiten ist eine Demontierbarkeit von Dialysemodulen zwingend erforderlich. Dazu werden bei konventionellen "Plate-and-Frame" Systemen Dichtrahmen zur Abdichtung der einzelnen Kammern eingesetzt. Um die Dichtigkeit zu gewährleisten sind sehr hohe Anpressdrücke erforderlich, die im industriellen Maßstab mit hydraulischen Pressen realisiert werden. Die Notwendigkeit von Dichtrahmen, die aufwendige Konstruktion der Module und die geringen Packungsdichten derartiger Systeme führen zu hohen Investitionskosten.

Es kann festgestellt werden, dass von wenigen Ausnahmen abgesehen, alle bekannten Membrantrennverfahren erst mit der Überführung von einer Flachgeometrie in eine Hohlfaser- oder Rohrgeometrie industriell erfolgreich umgesetzt werden konnten. Beispiele sind neben vielen anderen die Umkehrosmose, die Ultrafiltration, die Gastrennung aber auch die Nierendialyse. Für die Donnan-Dialyse wurde dieser Schritt bislang nicht durchgeführt, da eine strikte Gegenstromführung von Diffusat und Dialysat in einem Membranwickel bisher als unmöglich gilt.

Die Druckschrift CN 101 983 756 A offenbart ein Spiralwickelmodul, bei dem ein Dialysat und eine zu dialysierende Flüssigkeit mittels eines Gegenstromführung getrennt werden.

In der Druckschrift GB 489 654 A wird ein Gegenstromverfahren zur Durchführung einer Dialyse offenbart.

Ein lonentauscher mit einer um mittig angeordnete Röhren gewickelten Membran ist in der Druckschrift JP H02 180 622 A offenbart.

Die Druckschrift WO 91/11249 A1 offenbart ein spiralförmig gewundenes Modul zum Trennen von Flüssigkeiten, mit einer semipermeablen Membran und einer Hochdruckregion, die von zwei Niederdruckregionen umgeben ist.

In der Druckschrift JP S51 24587 A wird eine Vorrichtung mit zum Leiten von Flüssigkeiten durch in einem Zentralbereich der Vorrichtung angeordnete Rohre offenbart.

Die Druckschrift US 5 580 452 A offenbart ein Modul zum Bewegen von Flüssigkeit durch ein Gehäuse, in dem eine äußere und eine innere Membran angeordnet sind.

### Zusammenfassung der Erfindung

Das erfindungsgemäße Membranmodul ist in Anspruch 1 definiert. Vorteilhafte Ausführungen sind in den abhängigen Ansprüchen aufgeführt. Erfindungsgemäß wird ein Membranmodul zur Diffusionsdialyse von Fluiden bereitgestellt, das mindestens zwei Strömungskanäle aufweist. Die mindestens zwei Strömungskanäle des erfindungsgemäßen Membranmoduls sind durch Aufwickeln von mindestens einem ersten Abschnitt mindestens einer Membranfolie und mindestens einem zweiten Abschnitt der mindestens einen Membranfolie auf einen Zentralkörper gebildet, wobei eine Wicklung des mindestens einen ersten Abschnitts durch mindestens einen Abstandshalter von einer Wicklung des mindestens einen zweiten Abschnitts beabstandet ist, wodurch sich beim Aufwickeln zwei voneinander getrennte Strömungskanäle bilden, die jeweils von der mindestens einen Membranfolie begrenzt sind.

In einer Ausführungsform weist das erfindungsgemäße Membranmodul eine erste Membranfolie und mindestens eine zweite Membranfolie auf, wobei der mindestens eine erste Abschnitt der ersten Membranfolie zugehörig ist und der mindestens eine zweite Abschnitt der zweiten Membranfolie zugehörig ist.

In einer weiteren Ausführungsform weist der Zentralkörper des erfindungsgemäßen Membranmoduls eine erste Hälfte und eine zweite Hälfte auf, die miteinander verbunden sind und zwischen die die mindestens eine den ersten Abschnitt und den zweiten Abschnitt aufweisende durchgehende Membranfolie gelegt ist.

In noch einer weiteren Ausführungsform ist der Zentralkörper des erfindungsgemäßen Membranmoduls einteilig ausgebildet.

Gemäß Anspruch 1 ist der mindestens eine erste Abschnitt der mindestens einen Membranfolie an mindestens einem ersten Abdichtelement befestigt, das an dem Zentralkörper angebracht ist und den mindestens einen ersten Abschnitt der mindestens einen Membranfolie zum Abdichten zwischen dem mindestens einen ersten Abdichtelement und dem Zentralkörper einspannt, und bei dem der mindestens eine zweite Abschnitt der mindestens einen Membranfolie an mindestens einem zweiten Abdichtelement befestigt ist, das an dem Zentralkörper angebracht ist und den mindestens einen zweiten Abschnitt der mindestens einen Membranfolie zum Abdichten zwischen dem mindestens einen zweiten Abdichtelement und dem Zentralkörper einspannt.

Gemäß Anspruch 1 ermöglichen weitere Merkmale einen Gegenstrombetrieb des Membranmoduls, wobei mindestens eine erste Umlenkfolie an mindestens einem dritten Abdichtelement und mindestens eine zweite Umlenkfolie an mindestens einem vierten Abdichtelement befestigt ist, wobei das mindestens eine dritte Abdichtelement und das mindestens eine vierte Abdichtelement zwischen dem mindestens einen ersten Abdichtelement und dem mindestens einen zweiten Abdichtelement angeordnet sind, wobei die erste und die zweite Umlenkfolie gemeinsam mit dem ersten und dem zweiten Abschnitt der mindestens einen Membranfolie aufgewickelt ist, wobei eine Wicklung des mindestens einen ersten und zweiten Abschnitts der Membranfolie durch mindestens einen Abstandshalter von einer Wicklung der mindestens einen ersten und zweiten Umlenkfolie beabstandet ist, wodurch nach dem Aufwickeln die dann ausgebildeten Strömungskanäle jeweils von der mindestens einen Membranfolie und mindestens einer Umlenkfolie begrenzt sind.

Gemäß Anspruch 1 weist das Membranmodul die mindestens zwei Abschnitte der mindestens einen Membranfolie und die mindestens zwei Umlenkfolien auf, die mit dem mindestens einen ersten Abschnitt und dem mindestens einen zweiten Abschnitt alternierend an dem Zentralkörper angebracht und um den Zentralkörper gewickelt sind, wodurch sich vier Strömungskanäle ausbilden, wobei jeweils zwei der Strömungskanäle an einem Wickelende zusammengeführt sind, wodurch zwei der Strömungskanäle jeweils ein Einströmgebiet und zwei der Strömungskanäle jeweils ein Ausströmgebiet an dem Zentralkörper ausbilden und entsprechende Zulaufrohre und Ablaufrohre an dem Zentralkörper anbringbar sind und ein jeweiliges, durch das Membranmodul strömendes Fluid an dem Wickelende umgelenkt wird.

In noch einer weiteren Ausführungsform des erfindungsgemäßen Membranmoduls spannen das dritte und das vierte Abdichtelement jeweils die mindestens eine erste und die mindestens eine zweite Umlenkfolie zum Abdichten zwischen dem jeweiligen dritten und vierten Abdichtelement und dem Zentralkörper ein.

In einer Ausführungsform weist das erfindungsgemäße Membranmodul das mindestens eine Zulaufrohr und das mindestens eine Ablaufrohr auf, wobei das mindestens eine Zulaufrohr oder das mindestens eine Ablaufrohr zwischen dem mindestens einen ersten Abdichtelement und dem mindestens einen dritten Abdichtelement oder dem mindestens einen vierten Abdichtelement angeordnet ist und das entsprechend andere Rohr entsprechend zwischen dem mindestens einen zweiten Abdichtelement und dem dritten oder dem vierten Abdichtelement angeordnet ist.

In einer weiteren Ausführungsform des erfindungsgemäßen Membranmoduls werden das mindestens eine Zulaufrohr und das mindestens eine Ablaufrohr durch das Aufwickeln von der mindestens einen Membranfolie und/oder der mindestens einen ersten oder mindestens einen zweiten Umlenkfolie eingespannt und radial in Richtung des Zentralkörpers gedrückt, wodurch sie fixiert sind.

In noch einer weiteren Ausführungsform des erfindungsgemäßen Membranmoduls sind je ein Zulaufrohr und je ein Ablaufrohr alternierend zwischen dem ersten und dem zweiten bzw. dem dritten und dem vierten Abdichtelement angeordnet und sind jeweils einem Zulaufrohr und einem Ablaufrohr jeweils genau ein Strömungskanal zugeordnet.

In einer Ausführungsform des erfindungsgemäßen Membranmoduls sind das mindestens eine Zulaufrohr und das mindestens eine Ablaufrohr als Gitterrohre ausgebildet.

In einer weiteren Ausführungsform des erfindungsgemäßen Membranmoduls ermöglichen das mindestens eine Zulaufrohr und das mindestens eine Ablaufrohr einen auf eine Rohrachse des jeweiligen Rohres bezogenen radialen Fluideintritt und Fluidaustritt in bzw. aus dem jeweiligen Rohr.

In noch einer weiteren Ausführungsform des erfindungsgemäßen Membranmoduls besteht das mindestens eine Zulaufrohr und/oder das mindestens eine Ablaufrohr aus einem der Materialien Polypropylen (PP), Polyethylen (PE), Polyvinylchlorid (PVC), Polyphenylenether (PPE), Polyphenylenoxid (PPO) oder Polyphenylensulfid (PPS).

In einer Ausführungsform des erfindungsgemäßen Membranmoduls ist der mindestens eine Abstandshalter je ein Polymergitter und/oder Polymernetz, die eine Strömung in der Polymergitter- und/oder Polymernetzebene erlauben, wobei die Polymergitter und/oder Polymernetze aus einem der Materialien Polypropylen (PP), Polyethylen (PE), Polyvinylchlorid (PVC), Polyphenylenether (PPE), Polyphenylenoxid (PPO) oder Polyphenylensulfid (PPS) bestehen.

In einer weiteren Ausführungsform des erfindungsgemäßen Membranmoduls sind die Abstandshalter je eine Prägefolie aus einem der Materialien Polypropylen (PP), Polyethylen (PE), Polyvinylchlorid (PVC), Polyphenylenether (PPE), Polyphenylenoxid (PPO) oder Polyphenylensulfid (PPS).

In noch einer weiteren Ausführungsform des erfindungsgemäßen Membranmoduls ist jeweils mindestens ein Abstandshalter an dem mindestens einen Zulaufrohr und dem mindestens einen Ablaufrohr angebracht, wodurch mindestens einer der mindestens zwei Strömungskanäle durch die mindestens eine Membranfolie, die mindestens eine erste oder zweite Umlenkfolie und die jeweiligen Abstandshalter definiert ist.

In einer weiteren Ausführungsform des erfindungsgemäßen Membranmoduls ist der mindestens eine Abstandshalter mit dem ersten und zweiten Abschnitt der mindestens einen Membranfolie aufgewickelt.

Gemäß Anspruch 1 sind der mindestens eine erste Abschnitt der mindestens einen Membranfolie und der mindestens eine zweite Abschnitt der mindestens einen Membranfolie an einer äußeren Wicklung miteinander verbunden, wobei zwischen dem ersten Abschnitt und dem zweiten Abschnitt der mindestens einen Membranfolie zwei Strömungskanäle ausgebildet sind und die jeweilige sich zwischen den verbundenen ersten und zweiten Abschnitten befindliche Umlenkfolie gekürzt ist, wodurch jeweils ein Umlenkpunkt gebildet ist.

In einer weiteren Ausführungsform des erfindungsgemäßen Membranmoduls sind ein Ende des ersten Abschnitts und ein Ende des zweiten Abschnitts durch eine gemeinsame Einwicklung und ein Klemmprofil aus Polypropylen (PP), Polyethylen (PE), Polyvinylchlorid (PVC), Polyphenylenether (PPE), Polyphenylenoxid (PPO) oder Polyphenylensulfid (PPS) miteinander verbunden und an der Verbindung abgedichtet.

Gemäß Anspruch 1 ist das erfindungsgemäßen Membranmodul bezogen auf eine Körperlängsachse des Zentralkörpers radial nach außen abgedichtet.

In einer Ausführungsform weist das erfindungsgemäße Membranmodul über der äußeren Wicklung einen Folienschlauch auf, der aus einem der Materialien PP, PE, PVC, PPE, PPO, PPS besteht und das Membranmodul nach außen abdichtet.

In einer weiteren Ausführungsform weist das erfindungsgemäße Membranmodul eine mehrfach über das Membranmodul gewickelte Folie auf, die das Membranmodul nach außen abdichtet, wobei die Folie eine der mindestens einen ersten oder zweiten Umlenkfolie sein kann, die sich an einem Wickelende nicht zwischen den miteinander verbundenen ersten und zweiten Abschnitten der mindestens einen Membranfolie befindet und über das Wickelende hinaus gewickelt ist, wodurch sich ein weiterer Umlenkpunkt ausbildet.

In noch einer weiteren Ausführungsform des erfindungsgemäßen Membranmoduls ist jeweils eine Stirnseite des Membranmoduls mit einer Verschlussmasse abgedichtet, wobei mindestens eine Stirnseite mindestens zwei Offnungen in der Verschlussmasse in dem mindestens einen Zulaufrohr und dem mindestens einen Ablaufrohr aufweist, die einen Zulauf und einen Ablauf eines jeweiligen, das Membranmodul durchströmenden Fluids in und aus dem mindestens einen Zulauf- und Ablaufrohr gestatten.

In einer weiteren Ausführungsform des erfindungsgemäßen Membranmoduls ist die Verschlussmasse ein Epoxidharz oder eine Silikonvergussmasse.

In einer Ausführungsform des erfindungsgemäßen Membranmoduls ist zum Austausch des Membranmoduls in mindestens einer der mindestens zwei Öffnungen ein selbstschließender Schnellverschluss anbringbar.

In einer weiteren Ausführungsform des erfindungsgemäßen Membranmoduls ist der Zentralkörper ein längliches Profil, das einen kreisförmigen oder nichtkreisförmigen Querschnitt aufweist.

In noch einer weiteren Ausführungsform des erfindungsgemäßen Membranmoduls ist der Zentralkörper zum Schutz gegen ein jeweiliges, das Membranmodul durchströmendes Fluid mit einem der Materialien Polypropylen (PP), Polyethylen (PE), Polyvinylchlorid (PVC), Polyphenylenether (PPE), Polyphenylenoxid (PPO) oder Polyphenylensulfid (PPS) überzogen oder beschichtet.

In einer Ausführungsform des erfindungsgemäßen Membranmoduls bestehen die Abdichtelemente aus einem Metallwerkstoff und/oder einem Polymerwerkstoff, wobei Werkstoffe, die korrosionsempfindlich sind, mit einem Überzug aus einem der Materialien Polypropylen (PP), Polyethylen (PE), Polyvinylchlorid (PVC), Polyphenylenether (PPE), Polyphenylenoxid (PPO) oder Polyphenylensulfid (PPS) zum Schutz gegen das Fluid überzogen sind.

In einer weiteren Ausführungsform des erfindungsgemäßen Membranmoduls besteht die mindestens eine erste und die mindestens eine zweite Umlenkfolie aus einem der Materialien Polypropylen (PP), Polyethylen (PE), Polyvinylchlorid (PVC), Polyphenylenether (PPE), Polyphenylenoxid (PPO) oder Polyphenylensulfid (PPS).

Ferner betrifft die vorliegende Erfindung ein Verfahren, bei dem ein erstes Fluid in einen ersten Strömungskanal des Membranmoduls und ein zweites Fluid in einen zweiten Strömungskanal des Membranmoduls geleitet wird, wobei das erste Fluid und das zweite Fluid nach einem Gegenstromprinzip durch das Membranmodul geleitet werden.

In einer Ausführungsform des vorgestellten Verfahrens ist vorgesehen, dass der erste Strömungskanal des Membranmoduls zumindest bereichsweise, d. h. lediglich innerhalb eines ausgewählten Bereichs, auf einer ersten Seite von einer lonenaustauschermembranfolie und auf einer zweiten Seite von einer Umlenkfolie begrenzt wird, und bei dem der zweite Strömungskanal zumindest bereichsweise auf einer ersten Seite von der Umlenkfolie und auf einer zweiten Seite von der lonenaustauschermembranfolie begrenzt wird, wobei in dem ersten Strömungskanal und/oder in dem zweiten Strömungskanal ein Abstandshalter angeordnet wird.

In einer weiteren möglichen Ausführungsform des vorgestellten Verfahrens ist vorgesehen, dass das erste Fluid und das zweite Fluid an einem Ende des ersten Strömungskanals bzw. des zweiten Strömungskanals umgelenkt werden, wodurch ein Gegenstrom bezüglich einer Abströmrichtung des zweiten Strömungskanals gegenüber einer Einströmrichtung des ersten Strömungskanals und bezüglich einer Abströmrichtung des ersten Strömungskanals gegenüber einer Einströmrichtung des zweiten Strömungskanals eintritt und entsprechend eines Konzentrationsunterschieds eine Dialyse zwischen dem ersten Strömungskanal und dem zweiten Strömungskanal erfolgt.

### Kurzbeschreibung der Zeichnung

Figur 1 zeigt eine schematische Darstellung des Prinzips der Säuredialyse.
Figur 2 zeigt eine beispielhafte Ausführungsform des erfindungsgemäßen Membranmoduls vor einer Aufwicklung.
Figur 3 zeigt eine weitere beispielhafte Ausführungsform des erfindungsgemäßen Membranmoduls vor einer Aufwicklung.
Figur 4 zeigt einen Querschnitt durch ein erfindungsgemäßes Membranmodul.
Figur 5 zeigt einen Abschnitt an einem Ende einer Aufwicklung eines erfindungsgemäßen Membranmoduls.

### Ausführliche Beschreibung

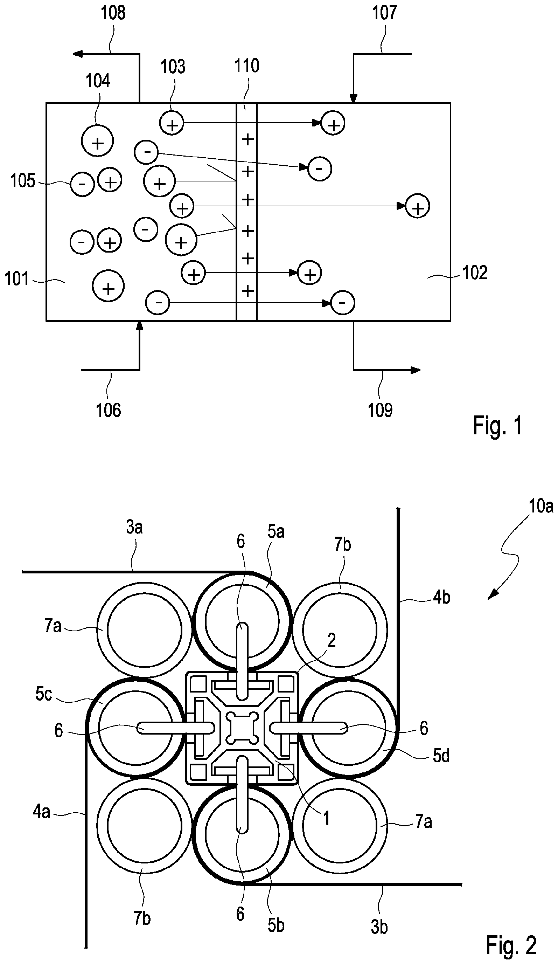

Figur 1 veranschaulicht das Prinzip der Dialyse anhand eines Beispiels der Säuredialyse. Eine erste Kammer 101 ist von einer zweiten Kammer 102 durch eine Membran 110 getrennt. Die Membran 110 ist eine semipermeable Anionenaustauschermembran, die durchlässig für Wasserstoffionen 103 und Säureanionen 105 ist. Der ersten Kammer 101 wird verbrauchte Altsäure 106 zugeführt. Die Altsäure 106 enthält Wasserstoffionen 103, Metallionen 104 und Säureanionen 105. Der zweiten Kammer 102 wird Wasser 107 zugeführt. Aufgrund eines ersten Konzentrationsunterschieds wandern Wasserstoffionen 103 und Säureanionen 105 aus der ersten Kammer 101 in die zweite Kammer 102. Jedoch wandern nicht alle Wasserstoffionen 103 und Säureanionen 105 aus der ersten Kammer 101 in die zweite Kammer 102, so dass sich ein zweiter Konzentrationsunterschied einstellt. Die ungleiche Verteilung der Ionen 103 und Anionen 105 in der ersten und der zweiten Kammer wird Donnan-Gleichgewicht genannt. Die in der Altsäure 106 vorhandenen Metallionen 104 können die semipermeable Membran 110 nicht passieren und werden als Retentat 108 zusammen mit den übrigen Säureanionen 105 und Wasserstoffionen 103 aus der ersten Kammer 101 abgeführt. Das in der zweiten Kammer 102 vorhandene Wasser 107 mit den hinein gewanderten Wasserstoffionen 103 und Säureanionen 105 wird als Diffusat 109 aus der zweiten Kammer 102 abgeführt.

In Figur 2 wird ein Membranmodul 10a für Dialyseverfahren, die auf dem Donnan-Effekt aufbauen, gezeigt. Die Ansicht der Figur 2 zeigt eine Draufsicht oder Querschnittsansicht des Membranmoduls 10a. Eine Körperachse des Membranmoduls 10a erstreckt sich aus der Sichtebene heraus. Das erfindungsgemäße Membranmodul 10a bildet somit einen länglichen Hohlkörper. Mit einer solchen Anordnung des Membranmoduls 10a lässt sich ein Gegenstrombetrieb der Dialyse realisieren. Das erfindungsgemäße Membranmodul 10a weist einen Zentralkörper 1 auf. In der in der Figur 2 gezeigten Ausführungsform ist der Zentralkörper 1 ein Aluminiumprofil mit einem im Wesentlichen viereckigen Querschnitt. Der Zentralkörper 1 ist gegen Angriffe der Säure und/oder der Lauge mit einem säure- und/oder laugenresistenten Material geschützt. Ein solches Material kann beispielsweise Polypropylen (PP), Polyethylen (PE), Polyvinylchlorid (PVC), Polyphenylenether (PPE), Polyphenylenoxid (PPO) oder Polyphenylensulfid (PPS) sein. Alternativ könnte als Zentralkörper ein Profil aus einem faserverstärkten Kunststoff (GFK, CFK) verwendet werden. Um den Zentralkörper 1 ist eine Mehrzahl an Profilen 5a bis 5d, 7a, 7b angeordnet. An einem ersten Abdichtelement 5a ist eine erste Membranfolie befestigt, die einen ersten Abschnitt 3a aufweist. An einem zweiten Abdichtelement 5b ist eine zweite Membranfolie befestigt, die einen zweiten Abschnitt 3b aufweist. Beispielsweise kann eine lonenaustauschermembranfolie vom Typ fumasep der Firma Fumatech verwendet werden. In der in Figur 2 gezeigten Ausführungsform des erfindungsgemäßen Membranmoduls 10a sind die Abdichtelemente 5a, 5b als Rohre bzw. Spannrohre ausgebildet, die den ersten Abschnitt 3a und den zweiten Abschnitt 3b zwischen den Spannrohren 5a, 5b und dem Zentralkörper 1 einspannen. Insbesondere in der in Figur 2 gezeigten Ausführungsform ist das zweite Abdichtelement 5b gegenüber dem ersten Abdichtelement 5a angeordnet.

In einer nicht gezeigten alternativen Ausführungsform ist es vorstellbar, dass der Zentralkörper 1 eine erste Hälfte aufweist, die mit einer zweiten Hälfte verbunden ist, wobei zwischen der einen ersten Hälfte und der einen zweiten Hälfte eine Membranfolie 3 eingespannt ist, die einen ersten und einen zweiten Abschnitt 3a, 3b aufweist.

Das erste und das zweite Abdichtelement 5a, 5b sind an dem Zentralkörper 1 mittels Spannelementen 6 befestigt. Spannelemente 6 sind beispielsweise Federstifte, die das Abdichtelement 5a, 5b in Richtung des Zentralkörpers 1 ziehen. Zum Abdichten sind der erste Abschnitt 3a und der zweite Abschnitt 3b jeweils zwischen dem jeweiligen Abdichtelement 5a, 5b und dem Zentralköper 1 eingespannt. Dazu können der erste und der zweite Abschnitt 3a, 3b jeweils mehrmals um das jeweilige Abdichtelement 5a, 5b gewickelt werden. In der gezeigten Ausführungsform sind im Wesentlichen um einen 90 Grad Winkel versetzt, ein drittes und ein viertes Abdichtelement 5c, 5d an dem Zentralkörper 1 mittels Spannelementen 6 befestigt. An dem dritten Abdichtelement 5c ist eine erste Umlenkfolie 4a angebracht. Die erste Umlenkfolie 4a ist zwischen dem dritten Abdichtelement 5c und dem Zentralkörper 1 eingespannt. An dem vierten Abdichtelement 5d ist eine zweite Umlenkfolie 4b angebracht, die zwischen dem vierten Abdichtelement 5d und dem Zentralkörper 1 eingespannt ist. Die erste und die zweite Umlenkfolie 4a, 4b sind für ein das Membranmodul 10a durchströmendes Fluid undurchlässig. Geeignete Materialien für die erste und die zweite Umlenkfolie sind beispielsweise Polypropylen (PP), Polyethylen (PE), Polyvinylchlorid (PVC), Polyphenylenether (PPE), Polyphenylenoxid (PPO) oder Polyphenylensulfid (PPS). Die Umlenkfolien 4a, 4b können bspw. eine Dicke von ungefähr 10 Mikrometer bis 200 Mikrometer aufweisen. Auch das dritte und vierte Abdichtelement 5c, 5d sind in der in Figur 2 gezeigten Ausführungsform als Spannrohre 5c, 5d ausgebildet. Insbesondere in der in Figur 2 gezeigten Ausführungsform ist das dritte Abdichtelement 5c gegenüber dem vierten Abdichtelement 5d angeordnet. Somit sind jeweils das erste und zweite Abdichtelement 5a, 5b und das dritte und vierte Abdichtelement 5c, 5d einander gegenüber angeordnet. Es sind jedoch auch Ausführungsformen vorstellbar, bei denen die jeweiligen Abdichtelemente einen Versatz zueinander aufweisen.

Die Spannelemente 6 ziehen die Spannrohre 5a bis 5d jeweils in Richtung des Zentralkörpers 1, um die jeweiligen Folien 3a, 3b, 4a, 4b zwischen dem jeweiligen Spannrohr 5a bis 5d und dem Zentralkörper 1 einzuspannen. Als Spannelemente 6 können beispielsweise Federsplinte verwendet werden, die in geeignete Bohrungen an jeweiligen Rohrenden der Spannrohre 5a bis 5d bzw. des Zentralkörpers 1 eingeführt sind. Zusätzlich wird über die Einspannung eine Dichtung erzielt, so dass zwischen den Spannrohren 5a bis 5d und dem Zentralkörper 1 keine Säure oder Lauge hindurchtritt. Die Spannrohre 5a bis 5d können in das den Zentralkörper 1 schützende Material eindringen, um eine Dichtfläche zu erhöhen und die Dichtung zu verbessern. Metallprofile, wie das in der Ausführungsform in Figur 2 verwendete Aluminiumprofil (bspw. der Firma Bosch-Rexroth) haben eine höhere Steifigkeit als Rohre bzw. Profile aus einem Polymermaterial und sind daher zur Übertragung von Anpresskräften bis in eine Wickelmitte als Abdichtelemente bzw. Spannrohre 5a bis 5d vorzuziehen. Das in Figur 2 verwendete Aluminiumprofil als Zentralkörper weist beispielsweise eine Kantenlänge von 30 Millimeter und eine Länge von 50 Zentimeter auf. Die Abdichtelement bzw. Spannrohre 5a bis 5d können ebenfalls aus Metall sein. In diesem Fall sind die Spannrohre 5a bis 5d auch mit einem resistenten Material, wie beispielsweise einem PP-Schrumpfschlauch überzogen.

Zwischen den Spannrohren 5a bis 5d, die beispielsweise einen Durchmesser von ungefähr 25 mm aufweisen, sind alternierend jeweils ein Zulaufrohr 7a und ein Ablaufrohr 7b angeordnet. Die Zulauf- bzw. Ablaufrohre 7a, 7b sind beispielsweise Gitterrohre mit einem Durchmesser von ungefähr 25 mm und weisen über ihren Umfang verteilt Öffnungen auf, damit auf ihre Längsachse bezogen radial Säure oder Lauge ein- bzw. austreten kann. In Figur 2 befindet sich also links neben dem ersten Spannrohr 5a, an dem die Membranfolie mit dem ersten Abschnitt 3a angebracht ist, ein erstes Zulaufrohr 7a. Neben dem ersten Zulaufrohr 7a befindet sich das Spannrohr 5c, an dem die erste Umlenkfolie 4a angebracht ist. Daneben befindet sich ein erstes Ablaufrohr 7b. Neben dem ersten Ablaufrohr 7b befindet sich das zweite Spannrohr 5b, an dem die Membranfolie mit dem zweiten Abschnitt 3b angebracht ist. Neben dem zweiten Spannrohr 5b befindet sich ein zweites Zulaufrohr 7a und daneben das vierte Spannrohr 5d, an dem die zweite Umlenkfolie 4b angebracht ist. Neben dem vierten Spannrohr 5d befindet sich ein zweites Ablaufrohr 7b. Neben dem zweiten Ablaufrohr 7b befindet sich wieder das erste Spannrohr 5a. Das erfindungsgemäße Membranmodul 10a weist also mindestens zwei Zulaufrohre 7a und mindestens zwei Ablaufrohre 7b auf.

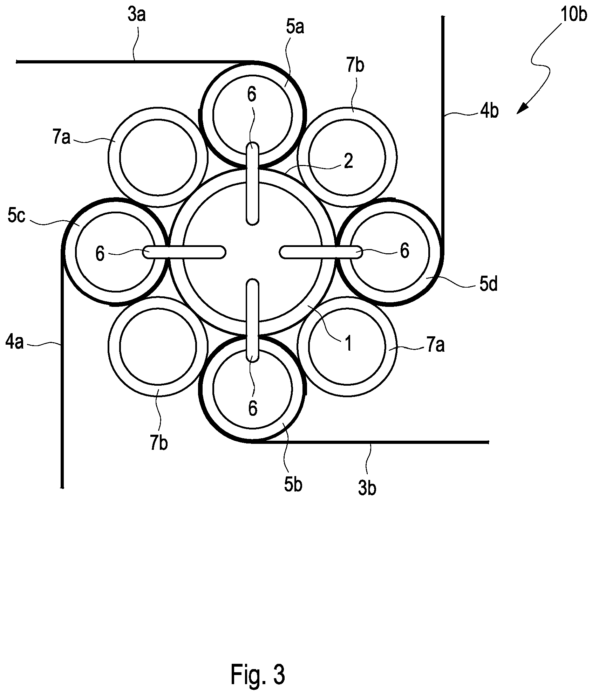

Figur 3 zeigt im Wesentlichen den Aufbau eines erfindungsgemäßen Membranmoduls 10b, wie er aus Figur 2 ersichtlich ist. In Figur 3 ist lediglich der Zentralkörper 1 durch einen länglichen Hohlkörper mit rundem Querschnitt gebildet, anstatt durch ein im Wesentlichen viereckiges Profil.

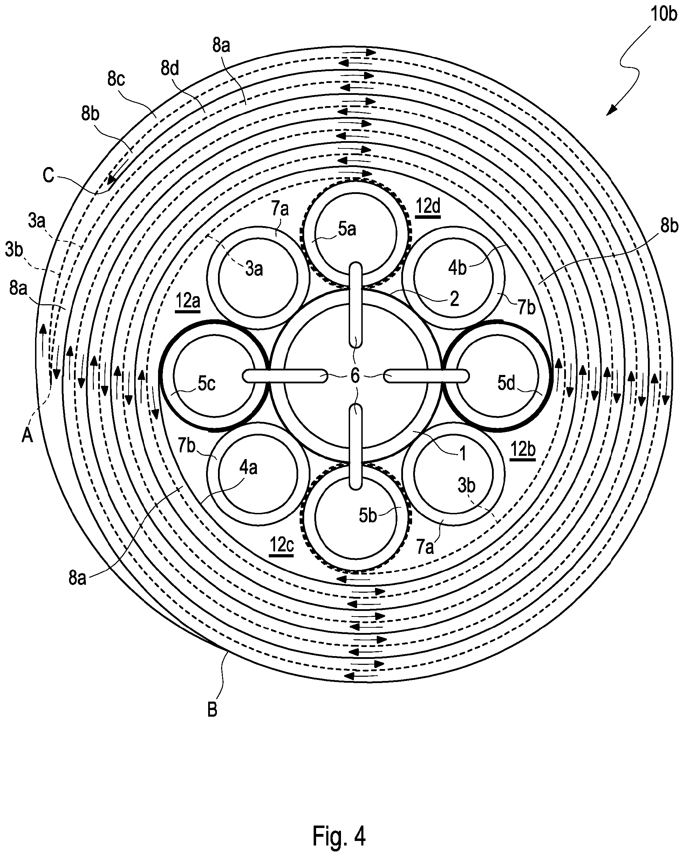

Während die Figuren 2 und 3 den Bereich des erfindungsgemäßen Membranmoduls 10a, 10b um den Zentralkörper 1 zeigen, zeigt Figur 4 eine Querschnittsansicht durch ein erfindungsgemäßes gewickeltes Membranmodul 10b. Die zuvor genannten ersten und zweiten Abschnitte 3a, 3b der Membranfolien und die erste und die zweite Umlenkfolie 4a, 4b sind gemeinsam um die um den Zentralkörper 1 angeordneten Abdichtelemente und Rohre 5a bis 5d, 7a, 7b gewickelt. Durch das Wickeln der Folien um den Zentralkörper 1 und Vorsehen von jeweiligen, hier nicht gezeigten, zwischen den jeweiligen Folien 3a, 3b, 4a, 4b verlaufenden Abstandshaltern 9 bilden sich zwischen den Membranfolien 3a, 3b und den Umlenkfolien 4a, 4b mindestens vier Strömungskanäle 8a, 8b, 8c, 8d aus. Die Strömungskanäle 8a, 8b, 8c, 8d verlaufen spiralförmig um den Zentralkörper 1.

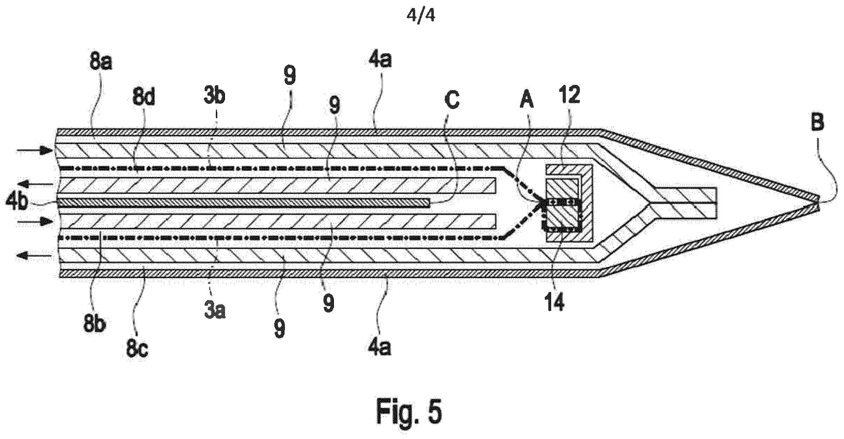

Die in Figur 4 nicht gezeigten Abstandshalter 9 (Figur 5) sind an den Zulaufrohren 7a und an den Ablaufrohren 7b ähnlich den Membranfolienabschnitten 3a, 3b und den Umlenkfolien 4a, 4b angebracht. Die Abstandshalter 9 sind beispielsweise biplanare Strömungsgitter, beispielsweise der Firma tenax (Modell TENAX OS 050). Die Abstandshalter 9 beabstanden die jeweilige Membranfolie 3a, 3b von der entsprechenden jeweiligen Umlenkfolie 4a, 4b, so dass die Strömungskanäle 8a, 8b, 8c, 8d sich in geeigneter Weise dazwischen ausbilden. In den Strömungskanälen 8a, 8b, 8c, 8d strömt jeweils in Umfangsrichtung die Säure oder die Lauge, also ein Fluid. Die Strömungsrichtung in den Strömungskanälen 8a, 8b, 8c, 8d ist in Figur 4 durch Pfeile angedeutet. Die Strömungskanäle 8a, 8b, 8c, 8d sind durch mindestens eine Membranfolie 3a, 3b, mindestens eine Umlenkfolie 4a, 4b (die jeweiligen Abstandshalter 9 bzw. Strömungsgitter) und den Zentralkörper 1 begrenzt. Die Zulaufrohre 7a und Ablaufrohre 7b (sowie die Strömungsgitter 9) werden durch das Aufwickeln der Folien 3a, 3b, 4a, 4b in ihrer Lage an dem Zentralkörper 1 fixiert. Ein gewickeltes erfindungsgemäßes Membranmodul 10a, 10b weist jeweils mehrere Meter aufgewickelte Folie 3a, 3b, 4a, 4b und Strömungsgitter 9 auf.

Tritt durch ein Zulaufrohr 7a eine Säure oder eine Lauge (nachfolgend Fluid) in beispielsweise den Einströmbereich 12a des Strömungskanals 8a ein, strömt das Fluid in Umfangsrichtung entgegen dem Uhrzeigersinn durch den Strömungskanal 8a. Der Strömungskanal 8a wird in seinem Verlauf im Wesentlichen durch den Abschnitt 3a der Membranfolie und die Umlenkfolie 4a (und die nicht gezeigten Abstandshalter 9) definiert. An einem gewissen Punkt A endet der erste Abschnitt 3a. Die in Bezug auf den Zentralkörper 1 radial weiter innen liegende erste Umlenkfolie 4a ist jedoch weiter um den Zentralkörper 1 gewickelt, wodurch sie bei der nächsten Umwicklung außen liegt.

Auch der zweite Abschnitt 3b ist um den Zentralkörper 1 gewickelt und definiert mit der zweiten Umlenkfolie 4b den zweiten Strömungskanal 8b (mit den nicht gezeigten Abstandshaltern 9). An dem Punkt A endet auch der zweite Abschnitt 3b. An Punkt A werden der erste Abschnitt 3a und der zweite Abschnitt 3b miteinander verbunden. Die in Bezug auf den Zentralkörper 1 radial weiter innen liegende zweite Umlenkfolie 4b hört dafür in Umfangsrichtung bspw. ungefähr 10 cm vor dem Ende der nicht gezeigten Abstandshalter 9 bzw. Strömungsgitter auf, die selber bspw. ungefähr 10 cm bis 20 cm vor dem Ende des ersten und zweiten Abschnitt 3a, 3b aufhören, also gekürzt sind, so dass am Ende des Strömungskanals 8b das Fluid umgelenkt wird (Punkt C). Bis zu dem Punkt A strömte das Fluid entgegen dem Uhrzeigersinn in dem Strömungskanal 8b, nach der Umlenkung um Punkt C strömt das Fluid im Uhrzeigersinn in dem Strömungskanal 8d zurück in Richtung des Zentralkörpers 1, wo es am Ende des Strömungskanals 8d in einen Ausströmbereich 12d und weiter in ein Ablaufrohr 7b strömt.

Wie erwähnt ist die erste Umlenkfolie 4a weiter um den Zentralkörper 1 gewickelt. Die erste Umlenkfolie 4a wird so weit um den Zentralkörper 1 gewickelt, dass sie über den zweiten Abschnitt 3b hinaus gewickelt ist. Dadurch kontaktiert sich die erste Umlenkfolie 4a im Punkt B selber und begrenzt den Strömungskanal 8a in Punkt B. Das in Strömungskanal 8a strömende Fluid wird hier nun auch umgelenkt und zwar, wie die Pfeilrichtung zeigt, von einer Strömung entgegen dem Uhrzeigersinn in eine Strömung im Uhrzeigersinn. Die erste Umlenkfolie 4a bildet also den radial außen liegenden Abschluss des Membranmoduls 1. Um eine Dichtheit des Moduls nach außen zu garantieren, kann die Umlenkfolie 4a mehrmals, bspw. zwei bis fünf Mal, weiter um das Membranmodul 10a, 10b gewickelt werden. Zusätzlich kann ein weiterer Schrumpfschlauch um das Membranmodul 10a,10b gezogen werden, um eine sichere Dichtung um den Mantel des Membranmoduls 10a, 10b zu erzielen. Der Schrumpfschlauch kann größer als ein Durchmesser des gewickelten Membranmoduls 10a, 10b gewählt werden, und auf ein Aluminiumflachprofil aufgewickelt sein.

Der Strömungskanal 8a wird, wie erwähnt, durch die Umlenkfolie 4a begrenzt und wird dadurch an Punkt B umgelenkt, damit das Fluid im Strömungskanal 8c zurück in Richtung eines Ausströmbereichs 12c und weiter in ein Ablaufrohr 7b strömen kann. Wie in Figur 4 ersichtlich, strömt das Fluid nach dem Umlenken um Punkt A entgegen der Einströmrichtung. Durch das spiralförmige Aufwickeln und dem Umlenken des Fluids in den Strömungskanälen 8a bis 8d bildet sich ein Gegenstromprinzip in dem Membranmodul 10 aus. Das heißt, dass, wie in Figur 4 ersichtlich, die Strömungsrichtung in dem Kanal 8c entgegen der Strömungsrichtung des Strömungskanals 8b ist und beide Strömungen nur durch den zweiten Abschnitt 3b der Membranfolie voneinander getrennt sind. Da der zweite Abschnitt 3b der Membranfolie zugeordnet ist, und diese semipermeabel ist, kann die Dialyse entsprechend des Konzentrationsunterschieds von dem Strömungskanal über den zweiten Abschnitt 3b der Membranfolie hinweg in den entsprechend anderen Strömungskanal erfolgen.

Die Strömungsrichtung des Strömungskanals 8d ist entgegen der Einströmrichtung des Strömungskanals 8a und die Strömungskanäle 8a und 8d sind durch den ersten Abschnitt 3a der Membranfolie voneinander getrennt. Es stellt sich ein Gegenstrom bezüglich der Abströmrichtung des Strömungskanals 8d gegenüber der Einströmrichtung des Strömungskanals 8a ein, so dass entsprechend des Konzentrationsunterschieds die Dialyse über den ersten Abschnitt 3a der Membranfolie hinweg erfolgt.

Zum Schutz gegen Säure oder Lauge können die Abstandshalter 9 ein Polymergitter oder Polymernetz sein. Diese Polymergitter oder Polymernetze erlauben eine Strömung in der Gitter- bzw. Netzebene. Sind die Abstandhalter jedoch aus einem Metallwerkstoff gefertigt, ist es zweckmäßig diese mit einem säure- und/oder laugenresistentem Werkstoff wie bspw. Polypropylen (PP), Polyethylen (PE), Polyvinylchlorid (PVC), Polyphenylenether (PPE), Polyphenylenoxid (PPO) oder Polyphenylensulfid (PPS) zu überziehen bzw. zu beschichten, um sie gegen das Fluid zu schützen.

Figur 5 zeigt eine schematische Darstellung von einem Wickelende, also den Abschnitt um die Punkte A, B und C in Figur 4. Die Wicklung wird von der Umlenkfolie 4a begrenzt, die auch den Strömungskanal 8a und 8c begrenzt. Die Abstandshalter 9 bzw. Strömungsgitter in dem Strömungskanal 8a und 8c sind im Bereich des Punkts B auf eine gleiche Länge wie die Membranfolien 3a, 3b gekürzt, so dass ein direkter Kontakt zwischen den Strömungsgittern 9 und den Membranfolien 3a, 3b auf einer Länge von 10 cm bis 20 cm entsteht. Dieser Kontakt wird durch Aufwickeln der Membranfolien 3a, 3b verwirklicht. Die Enden der Membranfolien 3a, 3b sind auf eine gleiche Länge gekürzt und, wie erwähnt, länger als die zweite Umlenkfolie 4b und die Strömungsgitter 9 in dem Strömungskanal 8b, 8d geschnitten. Zum Abdichten des Strömungskanals 8b, 8d sind die Enden der Membranfolien 3a, 3b zusammen aufgewickelt, wodurch eine Dichtung entsteht. Um die Dichtwirkung zu verbessern, sind die Membranfolien 3a, 3b, wie in Figur 5 gezeigt, gemeinsam mehrfach auf ein erstes Flachprofil 14 gewickelt. Das erste Flachprofil 14 kann beispielsweise ein Aluminiumprofil mit einer Breite von ungefähr 0,2 mm bis 2 mm und einer Höhe von ungefähr 1 mm bis 5 mm sein. Zum Schutz gegen das Fluid ist das Aluminiumprofil 14 mit beispielsweise einem PP-Schrumpfschlauch überzogen. Diese Dichtung kann mit einem weiteren Flachprofil zwischen ein Klemmprofil 12 aus PVC geklemmt sein, wodurch eine besonders gute Dichtung und ein sicherer Abschluss des Strömungskanals 8b, 8d entsteht. Der radiale äußere Abschluss des Membranmoduls 10a, 10b wird, wie bereits erwähnt, durch die Umwicklung mit der ersten Umlenkfolie 4a und einem zusätzlichen Schrumpfschlauch erzielt.

Die Stirnseiten des Membranmoduls 10a, 10b sind bspw. mit einem Epoxidharz vergossen, wodurch das Membranmodul 10a, 10b nach allen Seiten abgedichtet ist und die ungeschützten Enden der verbauten Aluminiumprofile 1, 14 geschützt sind. Damit ist die Wickelstruktur des gewickelten Membranmoduls 10a, 10b fixiert.

Auf einer Stirnseite des Membranmoduls 10a, 10b sind in dem Bereich der Zulaufrohre 7a und der Ablaufrohre 7b Bohrungen eingebracht. In der gezeigten Ausführungsform sind demnach vier Bohrungen in eine Stirnseite eingebracht. Die Bohrungen ermöglichen ein Ein- und Ausströmen in die bzw. aus den Zulauf- bzw. Ablaufrohren 7a, 7b.

Damit die erfindungsgemäßen Membranmodule 10a, 10b in einfacher Weise ausgetauscht werden können, sind in die Bohrungen selbstschlie-ßende Kupplungen aus beispielsweise PP eingeschraubt. Eine solche Kupplung ist bekannt und wird beispielsweise von der Firma Colder mit O-Ring-Dichtungen bereitgestellt.

Ein gemäß einer möglichen Ausgestaltung des vorgestellten Verfahrens gewickeltes Membranmodul weist einen Durchmesser von ungefähr 20 cm auf. Dabei kann die gewickelte Membranfolie eine Fläche von ungefähr 5 Quadratmeter bis 6 Quadratmeter aufweisen und ist insbesondere imstande 10 bis 15 Liter Säure bzw. Lauge je Stunde zu regenerieren. Dabei werden bei der Säuredialyse ungefähr 95 Prozent der Säure zurückgewonnen und über 99 Prozent der Salze zurückgehalten. Die erwartete Lebensdauer der Membranfolien 3a, 3b beträgt bspw. 2 Jahre, wodurch mit einem Membranmodul 10a, 10b bei ungefähr 5000 Betriebsstunden im Jahr über 100 Kubikmeter Säure zurückgewonnen werden können.

## Patentansprüche

1. Membranmodul (10a, 10b) zur Diffusionsdialyse von Fluiden, das mindestens zwei Strömungskanäle (8a, 8b) aufweist, die durch Aufwickeln von mindestens einem ersten Abschnitt (3a) mindestens einer Membranfolie und mindestens einem zweiten Abschnitt (3b) der mindestens einen Membranfolie auf einen Zentralkörper (1) gebildet sind, wobei eine Wicklung des mindestens einen ersten Abschnitts (3a) durch mindestens einen Abstandshalter (9) von einer Wicklung des mindestens einen zweiten Abschnitts (3b) beabstandet ist, wodurch sich beim Aufwickeln zwei voneinander getrennte Strömungskanäle (8a, 8b) bilden, die jeweils von der mindestens einen Membranfolie begrenzt sind,
und
bei dem der mindestens eine erste Abschnitt (3a) der mindestens einen Membranfolie an mindestens einem ersten Abdichtelement (5a) befestigt ist, das an dem Zentralkörper (1) angebracht ist und den mindestens einen ersten Abschnitt (3a) der mindestens einen Membranfolie zum Abdichten zwischen dem mindestens einen ersten Abdichtelement (5a) und dem Zentralkörper (1) einspannt, und bei dem der mindestens eine zweite Abschnitt (3b) der mindestens einen Membranfolie an mindestens einem zweiten Abdichtelement (5b) befestigt ist, das an dem Zentralkörper (1) angebracht ist und den mindestens einen zweiten Abschnitt (3b) der mindestens einen Membranfolie zum Abdichten zwischen dem mindestens einen zweiten Abdichtelement (5b) und dem Zentralkörper (1) einspannt, und
wobei mindestens eine erste Umlenkfolie (4a) an mindestens einem dritten Abdichtelement (5c) und mindestens eine zweite Umlenkfolie (4b) an mindestens einem vierten Abdichtelement (5d) befestigt ist, wobei das mindestens eine dritte Abdichtelement (5c) und das mindestens eine vierte Abdichtelement (5d) jeweils zwischen dem mindestens einen ersten Abdichtelement (5a) und dem mindestens einen zweiten Abdichtelement (5b) angeordnet sind, wobei die erste und die zweite Umlenkfolie (4a, 4b) gemeinsam mit dem ersten und dem zweiten Abschnitt (3a, 3b) der mindestens einen Membranfolie aufgewickelt sind, wobei eine Wicklung des mindestens einen ersten und zweiten Abschnitts (3a, 3b) der Membranfolie durch mindestens einen Abstandshalter (9) von einer Wicklung der mindestens einen ersten und zweiten Umlenkfolie (4a, 4b) beabstandet ist, wodurch nach dem Aufwickeln die dann ausgebildeten Strömungskanäle (8a, 8b, 8c, 8d) jeweils von der mindestens einen Membranfolie und mindestens einer Umlenkfolie (4a, 4b) begrenzt sind, und
wobei die mindestens zwei Umlenkfolien (4a, 4b) mit dem mindestens einen ersten Abschnitt (3a) und dem mindestens einen zweiten Abschnitt (3b) der mindestens einen Membranfolie alternierend an dem Zentralkörper (1) angebracht und um den Zentralkörper (1) gewickelt sind, wodurch sich vier Strömungskanäle (8a, 8b, 8c, 8d) ausbilden, die an einem Wickelende (A, C) so zusammengeführt sind, dass zwei Strömungskanäle (8a, 8b) jeweils ein Einströmgebiet (12a, 12b) und zwei Strömungskanäle (8c, 8d) jeweils ein Ausströmgebiet (12c, 12d) an dem Zentralkörper (1) ausbilden und entsprechende Zulaufrohre (7a) und Ablaufrohre (7b) an dem Zentralkörper (1) anbringbar sind und ein jeweiliges, durch das Membranmodul (10a, 10b) strömendes Fluid an dem Wickelende (A, C) umgelenkt wird, und bei dem der mindestens eine erste Abschnitt (3a) der mindestens einen Membranfolie und der mindestens eine zweite Abschnitt (3b) der mindestens einen Membranfolie an einer äußeren Wicklung miteinander verbunden sind (A), wobei zwischen dem ersten Abschnitt (3a) und dem zweiten Abschnitt (3b) der mindestens einen Membranfolie zwei Strömungskanäle (8b, 8d) ausgebildet sind und die jeweilige sich zwischen den verbundenen ersten und zweiten Abschnitten (3a, 3b) befindliche Umlenkfolie (4b) gekürzt ist, wodurch jeweils ein Umlenkpunkt (A,C) gebildet ist, wobei das Membranmodul bezogen auf eine Körperlängsachse des Zentralkörpers (1) radial nach außen abgedichtet ist.

2. Membranmodul (10a, 10b) nach Anspruch 1, das eine erste Membranfolie und mindestens eine zweite Membranfolie aufweist, wobei der mindestens eine erste Abschnitt (3a) der ersten Membranfolie zugehörig ist und der mindestens eine zweite Abschnitt (3b) der zweiten Membranfolie zugehörig ist.

3. Membranmodul (10a, 10b) nach Anspruch 1, bei dem der Zentralkörper (1) eine erste Hälfte und eine zweite Hälfte aufweist, die miteinander verbunden sind und zwischen die die mindestens eine den ersten Abschnitt (3a) und den zweiten Abschnitt (3b) aufweisende durchgehende Membranfolie gelegt ist.

4. Membranmodul (10a, 10b) nach Anspruch 2, bei dem der Zentralkörper (1) einteilig ausgebildet ist.

5. Membranmodul (10a, 10b) nach einem der voranstehenden Ansprüche,
wobei das dritte und das vierte Abdichtelement (5c, 5d) jeweils die mindestens eine erste und die mindestens eine zweite Umlenkfolie (4a, 4b) zum Abdichten zwischen dem jeweiligen dritten und vierten Abdichtelement (5c, 5d) und dem Zentralkörper (1) einspannen.

6. Membranmodul (10a, 10b) nach einem der voranstehenden Ansprüche, wobei das Membranmodul (10a, 10b) mindestens ein Zulaufrohr (7a) und mindestens ein Ablaufrohr (7b) aufweist, wobei das mindestens eine Zulaufrohr (7a) oder das mindestens eine Ablaufrohr (7b) zwischen dem mindestens einen ersten Abdichtelement (5a) und dem mindestens einen dritten Abdichtelement (5c) oder dem mindestens einen vierten Abdichtelement (5d) angeordnet ist und das entsprechend andere Rohr (7a, 7b) entsprechend zwischen dem mindestens einen zweiten Abdichtelement (5b) und dem dritten oder dem vierten Abdichtelement (5c, 5d) angeordnet ist.

7. Membranmodul nach Anspruch 6, bei dem das mindestens eine Zulaufrohr (7a) und das mindestens eine Ablaufrohr (7b) von der mindestens einen Membranfolie und/oder der mindestens einen ersten oder mindestens einen zweiten Umlenkfolie (4a, 4b) durch das Aufwickeln eingespannt und radial in Richtung des Zentralkörpers (1) gedrückt werden, wodurch sie fixiert sind, wobei insbesondere in dem Membranmodul (10, 10b) je ein Zulaufrohr (7a) und je ein Ablaufrohr (7b) alternierend zwischen dem ersten, dem zweiten, dem dritten und dem vierten Abdichtelement (5a bis 5d) angeordnet sind, und wobei jeweils einem Zulaufrohr (7a) und einem Ablaufrohr (7b) jeweils genau ein Strömungskanal (8a, 8b) zugeordnet ist.

8. Membranmodul (10a, 10b) nach Anspruch 6 oder 7, wobei jeweils mindestens ein Abstandshalter (9) an dem mindestens einen Zulaufrohr (7a) und dem mindestens einen Ablaufrohr (7b) angebracht ist, wodurch der Strömungskanal (8a, 8b) durch die mindestens eine Membranfolie, die mindestens eine erste oder zweite Umlenkfolie (4a, 4b) und die jeweiligen Abstandshalter (9) definiert ist.

9. Membranmodul (10a, 10b) nach einem der voranstehenden Ansprüche 6 bis 8, wobei jeweils eine Stirnseite des Membranmoduls (10a, 10b) mit einer Verschlussmasse abgedichtet ist, wobei mindestens eine Stirnseite mindestens zwei Öffnungen in der Verschlussmasse in dem mindestens einen Zulaufrohr (7a) und dem mindestens einen Ablaufrohr (7b) aufweist, die einen Zulauf und einen Ablauf eines jeweiligen, das Membranmodul durchströmenden Fluids in und aus dem mindestens einen Zulauf- und Ablaufrohr (7a, 7b) gestatten, wobei zum Austausch des Membranmoduls (10a, 10b) in mindestens einer Öffnung ein selbstschließender Schnellverschluss anbringbar ist.

10. Membranmodul (10a, 10b) nach einem der voranstehenden Ansprüche, bei dem der mindestens eine Abstandshalter (9) mit dem ersten und zweiten Abschnitt (3a, 3b) der mindestens einen Membranfolie aufgewickelt ist.

11. Membranmodul (10a, 10b) nach einem der voranstehenden Ansprüche, bei dem der mindestens eine erste Abschnitt (3a) der mindestens einen Membranfolie und der mindestens eine zweite Abschnitt (3b) der mindestens einen Membranfolie an einer äußeren Wicklung miteinander verbunden sind (A), wobei zwischen dem ersten Abschnitt (3a) und dem zweiten Abschnitt (3b) der mindestens einen Membranfolie zwei Strömungskanäle (8b, 8d) ausgebildet sind und die jeweilige sich zwischen den verbundenen ersten und zweiten Abschnitten (3a, 3b) befindliche Umlenkfolie (4b) gekürzt ist, wodurch jeweils ein Umlenkpunkt (A, B) gebildet ist.

12. Membranmodul (10a, 10b) nach einem der voranstehenden Ansprüche, wobei das Membranmodul (10a, 10b) eine mehrfach über das Membranmodul (10a, 10b) gewickelte Folie aufweist, die das Membranmodul (10a, 10b) nach außen abdichtet, wobei die Folie eine der mindestens einen ersten oder zweiten Umlenkfolie (4a, 4b) sein kann, die sich an einem Wickelende nicht zwischen den miteinander verbundenen ersten und zweiten Abschnitten (3a, 3b) der mindestens einen Membranfolie befindet und über das Wickelende hinaus gewickelt ist, wodurch sich ein weiterer Umlenkpunkt ausbildet.

13. Verfahren zur Diffusionsdialyse von Fluiden, bei dem ein erstes Fluid und ein zweites Fluid durch ein Membranmodul nach einem der Ansprüche 1 bis 12 geleitet werden, und wobei das erste Fluid von dem zweiten Fluid durch eine semipermeable lonenaustauschermembranfolie getrennt wird.

14. Verfahren nach Anspruch 13, wobei das erste Fluid in einen ersten Strömungskanal (8a, 8c) des Membranmoduls und ein zweites Fluid in einen zweiten Strömungskanal (8b, 8d) des Membranmoduls geleitet wird, und wobei das erste Fluid und das zweite Fluid nach einem Gegenstromprinzip durch das Membranmodul geleitet werden und bei dem der erste Strömungskanal (8a, 8c) des Membranmoduls zumindest bereichsweise auf einer ersten Seite von einer lonenaustauschermembranfolie (3a, 3b) und auf einer zweiten Seite von einer Umlenkfolie (4a, 4b) begrenzt wird, und bei dem der zweite Strömungskanal (8b, 8d) zumindest bereichsweise auf einer ersten Seite von der Umlenkfolie (4a, 4b) und auf einer zweiten Seite von der lonenaustauschermembranfolie (3a, 3b) begrenzt wird, wobei in dem ersten Strömungskanal (8a, 8c) und/oder in dem zweiten Strömungskanal (8b, 8d) ein Abstandshalter (9) angeordnet wird.

15. Verfahren nach Anspruch 14, bei dem das erste Fluid und das zweite Fluid an einem Ende (B, A) des ersten Strömungskanals (8a, 8c) bzw. des zweiten Strömungskanals (8b, 8d) umgelenkt werden, wodurch ein Gegenstrom bezüglich einer Abströmrichtung des zweiten Strömungskanals (8d) gegenüber einer Einströmrichtung des ersten Strömungskanals (8a) und bezüglich einer Abströmrichtung des ersten Strömungskanals (8c) gegenüber einer Einströmrichtung des zweiten Strömungskanals (8b) eintritt und entsprechend eines Konzentrationsunterschieds eine Dialyse zwischen dem ersten Strömungskanal und dem zweiten Strömungskanal erfolgt.

## Claims

1. A membrane module (10a, 10b) for diffusion dialysis of fluids having at least two flow channels (8a, 8b) that are formed by winding at least one first section (3a) of at least one membrane film and at least one second section (3b) of the at least one membrane film onto a central body (1), wherein a winding of the at least one first section (3a) is spaced from a winding of the at least one second section (3b) by at least one spacer (9), whereby two flow channels (8a, 8b) separated from one another are formed by winding, said channels being respectively bordered by the at least one membrane film,
and
wherein the at least one first section (3a) of the at least one membrane film is fixed to at least one first sealing element (5a) that is mounted on the central body (1) and that clamps the at least one first section (3a) of the at least one membrane film between the at least one first sealing element (5a) and the central body (1) for sealing, and wherein the at least one second section (3b) of the at least one membrane film is fixed to at least one second sealing element (5b) that is mounted on the central body (1) and that clamps the at least one second section (3b) of the at least one membrane film between the at least one second sealing element (5b) and the central body (1) for sealing,
and
wherein at least one first deflecting film (4a) is fixed to at least one third sealing element (5c), and at least one second deflecting film (4b) is fixed to at least one fourth sealing element (5d), wherein the at least one third sealing element (5c) and the at least one fourth sealing element (5d) are respectively disposed between the at least one first sealing element (5a) and the at least one second sealing element (5b), wherein the first and the second deflecting films (4a, 4b) are wound up together with the first and the second section (3a, 3b) of the at least one membrane film, wherein a winding of the at least one first and second section (3a, 3b) of the membrane film is spaced from a winding of the at least one first and second deflecting films (4a, 4b) by at least one spacer (9), whereby after the winding the flow channels (8a, 8b, 8c, 8d) that are then formed are respectively bordered by the at least one membrane film and at least one deflecting film (4a, 4b), and
wherein the at least two deflecting films (4a, 4b) and the at least one first section (3a) and the at least one second section (3b) of the at least one membrane film are mounted in an alternating manner on the central body (1), and wound around the central body (1), whereby four flow channels (8a, 8b, 8c, 8d) are formed that are merged at a winding end (A, C) such that two flow channels (8a, 8b) respectively form an inflow region (12a, 12b) and two flow channels (8c, 8d) respectively form an outflow region (12c, 12d) on the central body (1), and corresponding inlet tubes (7a) and outlet tubes (7b) can be mounted on the central body (1), and a respective fluid flowing through the membrane module (10a, 10b) is deflected at the winding end (A, C), and wherein the at least one first section (3a) of the at least one membrane film and the at least one second section (3b) of the at least one membrane film are connected to one another (A) at an outer winding, wherein two flow channels (8b, 8d) are formed between the first section (3a) and the second section (3b) of the least one membrane film, and the respective deflecting film (4b) located between the connected first and second sections (3a, 3b) is shortened, whereby respectively one deflection point (A, C) is formed, wherein the membrane module, relative to a longitudinal body axis of the central body (1), is sealed radially to the outside.

2. The membrane module (10, 10b) according to claim 1 having a first membrane film and at least one second membrane film, wherein the at least one first section (3a) belongs to the first membrane film, and the at least one second section (3b) belongs to the second membrane film.

3. The membrane module (10, 10b) according to claim 1, wherein the central body (1) has a first half and a second half that are connected to one another and between which the at least one continuous membrane film with the first section (3a) and the second section (3b) is laid.

4. The membrane module (10, 10b) according to claim 2, wherein the central body (1) is formed as a single piece.

5. The membrane module (10, 10b) according to one of the preceding claims, wherein the third and the fourth sealing element (5c, 5d) respectively clamp the at least one first and the at least one second deflecting film (4a, 4b) between the respective third and fourth sealing element (5c, 5d) and the central body (1) for sealing.

6. The membrane module (10, 10b) according to one of the preceding claims, wherein the membrane module (10a, 10b) has at least one inlet tube (7a) and at least one outlet tube (7b), wherein the at least one inlet tube (7a) or the at least one outlet tube (7b) is disposed between the at least one first sealing element (5a) and the at least one third sealing element (5c) or the at least one fourth sealing element (5d), and the corresponding other tube (7a, 7b) is correspondingly disposed between the at least one second sealing element (5b) and the third or the fourth sealing element (5c, 5d).

7. The membrane module according to claim 6, wherein the at least one inlet tube (7a) and the at least one outlet tube (7b) are clamped by the at least one membrane film and/or the at least one first or at least one second deflecting film (4a, 4b) by winding, and are radially pressed in the direction of the central body (1), whereby they are fixed, wherein particularly in the membrane module (10, 10b) one inlet tube (7a) each and one outlet tube (7b) each are alternatingly disposed between the first, the second, the third and the fourth sealing element (5a to 5d), and wherein one inlet tube (7a) and one outlet tube (7b) are respectively assigned to respectively precisely one flow channel (8a, 8b).

8. The membrane module (10, 10b) according to claim 6 or 7, wherein respectively at least one spacer (9) is mounted on the at least one inlet tube (7a) and the at least one outflow tube (7b), whereby the flow channel (8a, 8b) is defined by the at least one membrane film, the at least one first or second deflecting film (4a, 4b) and the respective spacers (9).

9. The membrane module (10, 10b) according to one of the preceding claims 6 to 8, wherein respectively one face of the membrane module (10a, 10b) is sealed with a sealing compound, wherein at least one face has at least two openings in the sealing compound in the at least one inlet tube (7a) and the at least one outlet tube (7b) that permit an inflow and an outflow of a respective fluid flowing through the membrane module into and out of the at least one inlet tube and outlet tube (7a, 7b), wherein a self-sealing rapid seal can be mounted in at least one opening for replacing the membrane module (10, 10b).

10. The membrane module (10, 10b) according to one of the preceding claims, wherein the at least one spacer (9) is wound with the first and second section (3a, 3b) of the at least one membrane film.

11. The membrane module (10, 10b) according to one of the preceding claims, wherein the at least one first section (3a) of the at least one membrane film and the at least one second section (3b) of the at least one membrane film are connected to one another at an outer winding (A), wherein two flow channels (8b, 8d) are formed between the first section (3a) and the second section (3b) of the at least one membrane film, and the respective deflecting film (4b) located between the connected first and second sections (3a, 3b) is shortened, whereby respectively one deflection point (A, B) is formed.

12. The membrane module (10, 10b) according to one of the preceding claims, wherein the membrane module (10a, 10b) has a film wound multiple times over the membrane module (10a, 10b) that seals the membrane module (10, 10b) to the outside, wherein the film can be one of the at least one first or second deflecting films (4a, 4b) that at a winding end is not located between the first and second sections (3a, 3b) connected to one another of the at least one membrane film and that is wound beyond the winding end, whereby an additional deflection point is formed.

13. A method for diffusion dialysis of fluids, wherein a first fluid and a second fluid are led through a membrane module according to one of claims 1 to 12, and wherein the first fluid is separated from the second fluid by a semi-permeable ion exchange membrane film.

14. The method according to claim 13, wherein the first fluid is led into a first flow channel (8a, 8c) of the membrane module, and a second fluid is led into a second flow channel (8b, 8d) of the membrane module, and wherein the first fluid and the second fluid are led through the membrane module according to a counterflow principle, and wherein the first flow channel (8a, 8c) of the membrane module is bordered at least in regions on a first side by an ion exchange membrane film (3a, 3b) and on a second side by a deflecting film (4a, 4b), and wherein the second flow channel (8b, 8d) is bordered at least in regions on a first side by the deflecting film (4a, 4b) and on a second side by the ion exchange membrane film (3a, 3b), wherein a spacer (9) is disposed in the first flow channel (8a, 8c) and/or in the second flow channel (8b, 8d).

15. The method according to claim 14, wherein the first fluid and the second fluid are deflected at an end (B, A) of the first flow channel (8a, 8c) or of the second flow channel (8b, 8d), whereby a counterflow arises relative to an outflow direction of the second flow channel (8d) in relation to an inflow direction of the first flow channel (8a), and relative to an outflow direction of the first flow channel (8c) in relation to an inflow direction of the second flow channel (8b), and a dialysis occurs between the first flow channel and the second flow channel according to a concentration difference.

## Revendications

1. Module membranaire (10a, 10b) destiné à réaliser la dialyse par diffusion de fluides, présentant au moins deux canaux d'écoulement (8a, 8b) qui sont formés par enroulement d'au moins une première section (3a) d'au moins un film membranaire et d'au moins une deuxième section (3b) de l'au moins un film membranaire sur un corps central (1), un enroulement de l'au moins une première section (3a) étant espacé par au moins un écarteur (9) d'un enroulement de l'au moins une deuxième section (3b), l'enroulement formant ainsi deux canaux d'écoulement (8a, 8b) séparés l'un de l'autre qui sont délimités respectivement par l'au moins un film membranaire,
et
dans lequel l'au moins une première section (3a) de l'au moins un film membranaire est fixée à au moins un premier élément d'étanchéité (5a) qui est rapporté sur le corps central (1) et serre l'au moins une première section (3a) de l'au moins un film membranaire pour assurer l'étanchéité entre l'au moins un premier élément d'étanchéité (5a) et le corps central (1), et dans lequel l'au moins une deuxième section (3b) de l'au moins un film membranaire est fixée à au moins un deuxième élément d'étanchéité (5b) qui est rapporté sur le corps central (1) et serre l'au moins une deuxième section (3b) de l'au moins un film membranaire pour assurer l'étanchéité entre l'au moins un deuxième élément d'étanchéité (5b) et le corps central (1),
et
dans lequel au moins un premier film de déviation (4a) est fixé à au moins un troisième élément d'étanchéité (5c) et au moins un deuxième film de déviation (4b) est fixé à au moins un quatrième élément d'étanchéité (5d), l'au moins un troisième élément d'étanchéité (5c) et l'au moins un quatrième élément d'étanchéité (5d) étant respectivement disposés entre l'au moins un premier élément d'étanchéité (5a) et l'au moins un deuxième élément d'étanchéité (5b), les premier et deuxième films de déviation (4a, 4b) étant enroulés conjointement avec la première et la deuxième section (3a, 3b) de l'au moins un film membranaire, un enroulement de l'au moins une première et deuxième section (3a, 3b) du film membranaire étant espacé par au moins un écarteur (9) d'un enroulement de l'au moins un premier et deuxième film de déviation (4a, 4b), de sorte qu'après l'action d'enroulement, les canaux d'écoulement (8a, 8b, 8c, 8d) ainsi réalisés sont délimités respectivement par l'au moins un film membranaire et au moins un film de déviation (4a, 4b), et
dans lequel les au moins deux films de déviation (4a, 4b) sont rapportés en alternance avec l'au moins une première section (3a) et l'au moins une deuxième section (3b) de l'au moins un film membranaire sur le corps central (1) et enroulés autour du corps central (1), formant ainsi quatre canaux d'écoulement (8a, 8b, 8c, 8d) qui sont réunis de telle sorte au niveau d'une extrémité d'enroulement (A, C) que deux canaux d'écoulement (8a, 8b) forment respectivement une zone d'entrée d'écoulement (12a, 12b) et deux autres canaux d'écoulement (8c, 8d) forment respectivement une zone de sortie d'écoulement (12c, 12d) sur le corps central (1) et que des tuyaux d'arrivée (7a) et de sortie (7b) correspondants peuvent être rapportés sur le corps central (1) et qu'un fluide correspondant, traversant le module membranaire (10a, 10b) est dévié à l'extrémité d'enroulement (A, C), et dans lequel l'au moins une première section (3a) de l'au moins un film membranaire et l'au moins une deuxième section (3b) de l'au moins un film membranaire sont reliées (A) entre elles au niveau d'un enroulement extérieur, deux canaux d'écoulement (8b, 8d) étant réalisés entre la première section (3a) et la deuxième section (3b) de l'au moins un film membranaire et le film de déviation (4b) respectif, situé entre les première et deuxième sections (3a, 3b) reliées, étant raccourci, formant ainsi un point de déviation (A, C) respectif, le module membranaire étant étanchéifié radialement vers l'extérieur par rapport à un axe longitudinal du corps central (1).

2. Module membranaire (10a, 10b) selon la revendication 1, présentant un premier film membranaire et au moins un deuxième film membranaire, l'au moins une première section (3a) étant associée au premier film membranaire et l'au moins une deuxième section (3b) étant associée au deuxième film membranaire.

3. Module membranaire (10a, 10b) selon la revendication 1, dans lequel le corps central (1) présente une première moitié et une seconde moitié qui sont reliées l'une à l'autre, et entre lesquelles est placé l'au moins un film membranaire continu présentant la première section (3a) et la deuxième section (3b).

4. Module membranaire (10a, 10b) selon la revendication 2, dans lequel le corps central (1) est réalisé d'un seul tenant.

5. Module membranaire (10a, 10b) selon l'une des revendications précédentes, dans lequel les troisième et quatrième éléments d'étanchéité (5c, 5d) serrent respectivement l'au moins un premier et l'au moins un deuxième films de déviation (4a, 4b) pour assurer l'étanchéité entre les troisième et quatrième éléments d'étanchéité (5c, 5d) respectifs et le corps central (1).

6. Module membranaire (10a, 10b) selon l'une des revendications précédentes, ledit module membranaire (10a, 10b) présentant au moins un tuyau d'arrivée (7a) et au moins un tuyau de sortie (7b), l'au moins un tuyau d'arrivée (7a) ou l'au moins un tuyau de sortie (7b) étant disposé entre l'au moins un premier élément d'étanchéité (5a) et l'au moins un troisième élément d'étanchéité (5c) ou l'au moins un quatrième élément d'étanchéité (5d), et l'autre tuyau (7a, 7b) étant disposé de manière correspondante entre l'au moins un deuxième élément d'étanchéité (5b) et le troisième ou le quatrième élément d'étanchéité (5c, 5d).

7. Module membranaire selon la revendication 6, dans lequel l'au moins un tuyau d'arrivée (7a) et l'au moins un tuyau de sortie (7b) sont serrés par l'au moins un film membranaire et/ou par l'au moins un premier ou par l'au moins un deuxième film de déviation (4a, 4b) par l'action d'enroulement et pressés radialement en direction du corps central (1) pour être fixés, dans lequel, en particulier dans le module membranaire (10, 10b), respectivement un tuyau d'arrivée (7a) et respectivement un tuyau de sortie (7b) sont disposés en alternance entre le premier, le deuxième, le troisième et le quatrième élément d'étanchéité (5a à 5d) et dans lequel respectivement exactement un canal d'écoulement (8a, 8b) est associé respectivement à un tuyau d'arrivée (7a) et à un tuyau de sortie (7b).

8. Module membranaire (10a, 10b) selon la revendication 6 ou 7, dans lequel au moins un écarteur (9) est respectivement rapporté sur l'au moins un tuyau d'arrivée (7a) et l'au moins un tuyau de sortie (7b), le canal d'écoulement (8a, 8b) étant ainsi défini par l'au moins un film membranaire, l'au moins un premier ou deuxième film de déviation (4a, 4b) et les écarteurs (9) respectifs.

9. Module membranaire (10a, 10b) selon l'une des revendications précédentes 6 à 8, dans lequel respectivement un côté frontal du module membranaire (10a, 10b) est rendu étanche par une composition de scellage, au moins un côté frontal présentant au moins deux ouvertures dans la composition de scellage dans l'au moins un tuyau d'arrivée (7a) et l'au moins un tuyau de sortie (7b), permettant une entrée et une sortie d'un fluide respectif traversant le module membranaire dans l'au moins un tuyau d'entrée et hors de l'au moins un tuyau de sortie (7a, 7b), un raccord à fermeture rapide automatique pouvant être rapporté dans au moins une ouverture en vue du remplacement du module membranaire (10a, 10b).

10. Module membranaire (10a, 10b) selon l'une des revendications précédentes, dans lequel l'au moins un écarteur (9) est enroulé avec les première et deuxième sections (3a, 3b) de l'au moins un film membranaire.

11. Module membranaire (10a, 10b) selon l'une des revendications précédentes, dans lequel l'au moins une première section (3a) de l'au moins un film membranaire et l'au moins une deuxième section (3b) de l'au moins un film membranaire sont reliées entre elles (A) au niveau d'un enroulement extérieur, deux canaux d'écoulement (8b, 8d) étant réalisés entre la première section (3a) et la deuxième section (3b) de l'au moins un film membranaire, et le film de déviation (4b) respectif, situé entre les première et deuxième sections (3a, 3b) reliées, étant raccourci, formant ainsi un point de déviation (A, B) respectif.

12. Module membranaire (10a, 10b) selon l'une des revendications précédentes, ledit module membranaire (10a, 10b) présentant un film enroulé plusieurs fois sur le module membranaire (10a, 10b), rendant le module membranaire (10a, 10b) étanche par rapport à l'extérieur, le film pouvant être l'un des au moins un premier ou deuxième films de déviation (4a, 4b) qui n'est pas situé, au niveau d'une extrémité d'enroulement, entre les première et deuxième sections (3a, 3b) reliées entre elles de l'au moins un film membranaire et qui est enroulé au-delà de l'extrémité d'enroulement, formant ainsi un autre point de déviation.

13. Procédé de dialyse par diffusion de fluides, dans lequel un premier fluide et un deuxième fluide sont acheminés à travers un module membranaire selon l'une des revendications 1 à 12 et dans lequel le premier fluide est séparé du deuxième fluide par un film membranaire semi-perméable échangeur d'ions.

14. Procédé selon la revendication 13, dans lequel le premier fluide est acheminé dans un premier canal d'écoulement (8a, 8c) du module membranaire et un deuxième fluide est acheminé dans un deuxième canal d'écoulement (8b, 8d) du module membranaire, et et dans lequel le premier fluide et le deuxième fluide sont acheminés à travers le module membranaire selon un principe de contre-courant et dans lequel le premier canal d'écoulement (8a, 8c) du module membranaire est délimité, au moins par zones, par un film membranaire échangeur d'ions (3a, 3b) sur un premier côté et par un film de déviation (4a, 4b) sur un second côté, et dans lequel le deuxième canal d'écoulement (8b, 8d) est délimité, au moins par zones, par le film de déviation (4a, 4b) sur un premier côté et par le film membranaire échangeur d'ions (3a, 3b) sur un second côté, un écarteur (9) étant disposé dans le premier canal d'écoulement (8a, 8c) et/ou dans le deuxième canal d'écoulement (8b, 8d).

15. Procédé selon la revendication 14, dans lequel le premier fluide et le deuxième fluide sont déviés au niveau d'une extrémité (B, A) respectivement du premier canal d'écoulement (8a, 8c) ou du deuxième canal d'écoulement (8b, 8d), provoquant ainsi un contre-courant concernant une direction de sortie du flux du deuxième canal d'écoulement (8d) par rapport à une direction d'entrée du premier canal d'écoulement (8a) et concernant une direction de sortie du flux du premier canal d'écoulement (8c) par rapport à une direction d'entrée du flux du deuxième canal d'écoulement (8b) et une dialyse entre le premier canal d'écoulement et le deuxième canal d'écoulement en fonction d'une différence de concentration.
